# EUROPEAN PATENT APPLICATION

(11) **EP 2 669 885 A2**
(43) Date of publication of application: **04.12.2013**
(21) Application number: 13168836.8
(22) Date of filing: 23.05.2013
(51) Int. Cl.: G09G 3/36, G02F 1/1334

(54) **Transparent display device and transparency adjustment method thereof**

(30) Priority: 28.05.2012 TW 101118965
(71) Applicant: Acer Incorporated, New Taipei City 221 (TW)
(72) Inventor: Ko, Chueh-Pin, 221 New Taipei City (TW)
(74) Representative: Becker Kurig Straus

(57) **Abstract**

A transparent display device and a transparency adjustment method thereof are provided. The transparent display device includes a transparent display unit, a backlight-penetrating unit and a processing unit. The processing unit control the backlight-penetrating unit to scatter a backlight or to block the backlight irradiated to the transparent display unit, so as to adjust the transparent degree of a transparent image displayed by the transparent display unit.

## Description

### BACKGROUND OF THE INVENTION

### Field of the Invention

The invention relates to a transparent display device. More particularly, the invention relates to a transparent display device capable of adjusting transparency and a transparency adjustment method of the transparent display device.

### Description of Related Art

At present, the performance requirements of the market for liquid crystal displays (LCD) include high contrast ratio, no gray scale inversion, little color shift, high luminance, high color vividness, high color saturation, quick response, wide-viewing angle, and so forth.

The LCDs can normally be categorized into a transmissive LCD, a reflective LCD, and a transflective LCD. Since the application of displays is rather extensive, transparent displays have been gradually developed. The transparent display has a sufficient transparency rate, which enables a person to look through the display panel and observe the background behind the panel. Besides, the transparent display has a wide range of use in a variety of areas, e.g., the transparent display may be applied to windows of buildings or cars or may be used in showcase events. Since the transparent display not only can perform the inherent transparent display function but also may serve as an information display in the future, the transparent display has attracted great attention of the market.

On account of the properties of transparency, the transparent display may be utilized in different manner in comparison with the conventional non-transparent display. However, the transparency properties may lead to certain issues. For instance, the background behind the transparent display may impair the quality of images displayed on the transparent display. Moreover, the overly intense ambient light or the complicated background color or lines may confuse a viewer who watches an image on the transparent display. Thereby, the display quality of the transparent display is significantly reduced.

### SUMMARY OF THE INVENTION

The invention is directed to a transparent display device that can change transparency of the transparent display device and further enhance readability of an image on the transparent display device.

In an embodiment of the invention, a transparent display device that includes a transparent display unit, a backlight-penetrating unit, and a processing unit is provided. The transparent display unit displays a transparent image frame according to a display data signal. The backlight-penetrating unit is configured at one side of the transparent display unit. The processing unit is coupled to the backlight-penetrating unit and controls the backlight-penetrating unit to scatter backlight or to block the backlight from irradiating the transparent display unit, so as to adjust transparency of the transparent image frame.

According to an embodiment of the invention, the processing unit further controls the backlight-penetrating unit to scatter or block all or part of the backlight according to the display data signal, so as to reduce transparency of all or several regions of the transparent image frame.

According to an embodiment of the invention, the regions of the transparent image frame having the reduced transparency are image regions corresponding to the display data signal.

According to an embodiment of the invention, the transparent display device further includes a sensing module configured on the transparent display unit and coupled to the processing unit. The sensing module senses one of conditions of environmental background of the transparent display device and a user's input, and the sensing module accordingly outputs a sensing signal. The processing unit further controls the backlight-penetrating unit to scatter or block all or part of the backlight according to the sensing signal, so as to adjust the transparency of all or several regions of the transparent image frame.

According to an embodiment of the invention, the backlight-penetrating unit is an organic light-emitting diode (OLED) display panel, a polymer dispersed LCD panel, or a twisted nematic liquid crystal display (TN-LCD) panel.

According to an embodiment of the invention, the processing unit further adjusts the transparency of the transparent image frame according to a gray scale level of an image object in the transparent image frame. If the gray scale level of the image object is lower than a predetermined gray scale level, transparency of the image object is reduced.

According to an embodiment of the invention, the processing unit further detects a closed figure image in the transparent image frame and adjusts transparency of an image inside the closed figure or an image outside the closed figure in the transparent image frame.

According to an embodiment of the invention, the transparent display unit is an OLED display panel or an LCD panel.

In an embodiment of the invention, a transparency adjustment method of a transparent display device is provided. The transparent display device includes a transparent display unit that displays a transparent image frame according to a display data signal. The transparency adjustment method includes following steps. A gray scale level of an image object in the transparent image frame is detected. Whether the gray scale level of the image object is lower than a predetermined gray scale level is determined. If the gray scale level of the image object is lower than the predetermined gray scale level, backlight corresponding to the image object is scattered or blocked, so as to reduce transparency of the image object.

In an embodiment of the invention, another transparency adjustment method of a transparent display device is provided. The transparent display device includes a transparent display unit that displays a transparent image frame according to a display data signal. The transparency adjustment method includes following steps. A closed figure image in the transparent image frame is detected. Whether to adjust transparency of an image inside the closed figure or an image outside the closed figure in the transparent image frame is determined according to an area, shape, or a length profile of the closed figure image. A portion of backlight is scattered or blocked from irradiating the transparent display unit, so as to adjust the transparency of the image inside the closed figure or the image outside the closed figure.

According to an embodiment of the invention, if the area or the length profile of the closed figure image is greater than a corresponding predetermined value, or if the shape of the closed figure image conforms to a predetermined figure, the transparency of the image inside the closed figure or the image outside the closed figure in the transparent image frame is adjusted.

According to an embodiment of the invention, the step of determining whether the transparency of the image inside the closed figure or the image outside the closed figure is adjusted includes following sub-steps. A gray scale level of the image inside the closed figure is detected. Whether the gray scale level of the image inside the closed figure is lower than a predetermined gray scale level is determined. If the gray scale level of the image inside the closed figure is lower than the predetermined gray scale level, backlight corresponding to the image inside the closed figure is scattered or blocked, so as to reduce the transparency of the image inside the closed figure.

In view of the above, the backlight-penetrating unit is utilized to scatter backlight or block the backlight from irradiating the transparent display unit, so as to adjust the transparency of the transparent display device and further enhance readability of an image on the transparent display device.

In order to make the aforementioned and other features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

FIG. 1 is a schematic diagram illustrating a transparent display device according to an embodiment of the invention.

FIG. 2 is a schematic diagram illustrating a transparent display unit and a backlight-penetrating unit according to an embodiment.

FIG. 3 is a schematic diagram illustrating that the backlight-penetrating unit scatters or blocks backlight according to an embodiment of the invention.

FIG. 4 is a flow chart illustrating a transparency adjustment method of a transparent display device according to an embodiment of the invention.

FIG. 5 is a schematic diagram illustrating transparency adjustment based on a gray scale level of an image object according to an embodiment of the invention.

FIG. 6 is a flow chart illustrating a transparency adjustment method of a transparent display device according to an embodiment of the invention.

FIG. 7A and FIG. 7B are schematic diagrams illustrating transparency adjustment based on a closed figure image according to an embodiment of the invention.

FIG. 8 is a flow chart illustrating a transparency adjustment method of a transparent display device according to an embodiment of the invention.

FIG. 9 is a schematic diagram illustrating a transparent image frame applying the transparency adjustment method according to an embodiment of the invention.

FIG. 10 is a schematic diagram illustrating a transparent display device according to another embodiment of the invention.

FIG. 11 is a schematic diagram illustrating a transparent display device according to another embodiment of the invention.

FIG. 12A to FIG. 12D' are schematic diagrams illustrating adjustment of transparency of a transparent image frame according to an embodiment of the invention.

### DESCRIPTION OF EMBODIMENTS

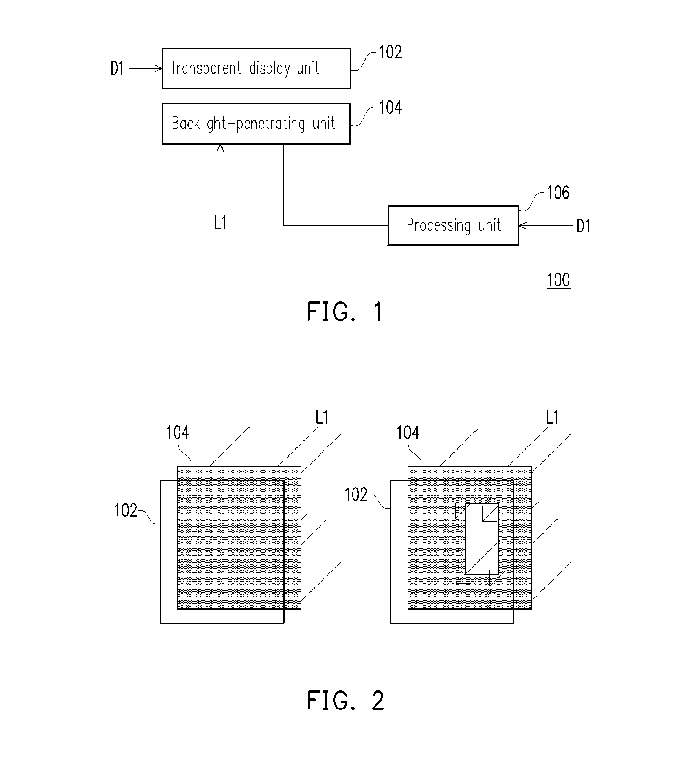

FIG. 1 is a schematic diagram illustrating a transparent display device according to an embodiment of the invention. With reference to FIG. 1, the transparent display device 100 includes a transparent display unit 102, a backlight-penetrating unit 104, and a processing unit 106. The transparent display unit 102 may be characterized by transparency, such as a liquid crystal display (LCD) panel or an organic light-emitting diode (OLED) display panel, for instance, and the transparent display unit 102 displays a transparent image frame according to a display data signal D1. The backlight-penetrating unit 104 is configured at one side of the transparent display unit 102 and coupled to the processing unit 106. The processing unit 106 may control the backlight-penetrating unit 104 to scatter backlight L1 or to block the backlight L1 from irradiating the transparent display unit 102, so as to adjust transparency of the transparent image frame. Here, the backlight L1 refers to light irradiating the backlight-penetrating unit 104, e.g., ambient light. Besides, the backlight-penetrating unit 104 may be an OLED display panel, a polymer dispersed LCD panel, or a twisted nematic liquid crystal display (TN-LCD) panel.

By adjusting the transmittance of the backlight-penetrating unit 104, the backlight L1 may be scattered or blocked, so as to reduce the transparency. Note that the transparency may be determined based on the transmittance or the scattering degree; therefore, the word "transparency" herein may include transmittance (or transmissivity) and haze. In one embodiment of the invention, the transparency adjustment of the transparent image frame is not limited to adjustment of the entire frame, and the processing unit 106 may control the backlight-penetrating unit 104 to scatter or block all or part of the backlight L1 according to the display data signal D1, so as to reduce transparency of all or several regions of the transparent image frame. Thereby, the transparent display device 100 can comply with the actual application requirements. Here, the regions of the transparent image frame having the reduced transparency are image regions corresponding to the display data signal D1, e.g., a window running an application program, a graphic user interface, and so forth.

FIG. 2 is a schematic diagram exemplarily illustrating the transparent display unit 102 and the backlight-penetrating unit according to an embodiment of the invention. As shown by the left view in FIG. 2, the backlight-penetrating unit 104 scatters or blocks all of the backlight L1, and therefore the backlight-penetrating unit 104 provides a background image with the reduced transparency. Thereby, the image frame displayed on the transparent display unit 102 is not interfered by the background at all and can be clearly shown. By contrast, as shown by the right view in FIG. 2, the backlight-penetrating unit 104 does not scatter or block all of the backlight L1; instead, the backlight L1 may pass one portion of image region (i.e., the blank rectangular region shown in FIG. 2). Thereby, the image frame displayed on the transparent display unit 102 is interfered by the background, and part of the scenery behind the transparent display unit 102 may be directly seen.

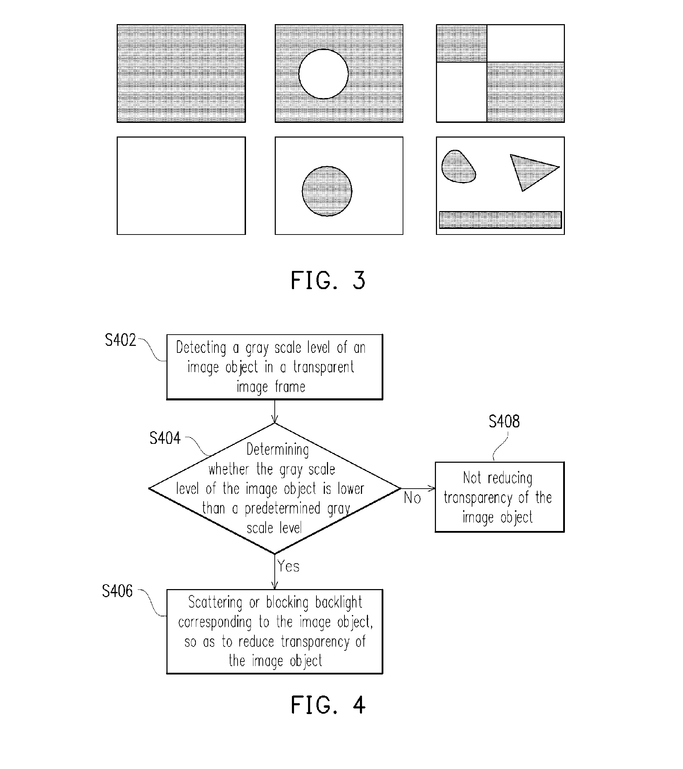

It should be mentioned that the image region shielded by the backlight-penetrating unit 104 scattering or blocking the backlight L1 is not limited to that shown in FIG. 2. FIG. 3 is a schematic diagram illustrating that the backlight-penetrating unit 104 scatters or blocks the backlight L1 according to an embodiment of the invention. In FIG. 3, the image regions formed by the backlight-penetrating unit 104 scattering or blocking the backlight L1 may all be transparent or non-transparent and may have any shape, e.g., circular, rectangular, triangular, or in any other irregular shape, and the number of the non-transparent image regions is not limited herein.

In brief, the backlight-penetrating unit 104 is responsible for controlling the transparency of the transparent image frame by scattering or blocking the external light from penetrating the backlight-penetrating unit 104; the transparent display unit 102 is responsible for displaying main contents. The control by the backlight-penetrating unit 104 is relevant to the displayed contents, and therefore the processing unit 106 is required. The processing unit 106, if actually applied, may be alpha layer control hardware (HW) that may have an independent HW design or may exist in video output HW, for instance. The processing unit 106 is applied to control the passage or non-passage of the backlight L1, so that the image contents may be displayed in front of the non-transparent backlight-penetrating unit 104. Alternatively, the scenery behind the transparent display device 100 may be seen in the region where image contents are not displayed.

The transparent display device 100 is normally constituted by software and hardware. In most cases, an operating system calculates the graphic user interface through a graphic render component (e.g. OpenGL, DirectX, GDI, and so on), and makes a display card or a display chip output the resultant graphic user interface onto the screen through a driver. The backlight-penetrating unit 104 may control the transparency by outputting different alpha (α) values, e.g., if α=0%, then the object is transparent; if α=100%, then the object is non-transparent. The voltage or the current corresponding to the α value may be changed in the backlight-penetrating unit 104 described in different embodiments. For instance, in a TN-LCD, when the voltage is 5 V, α=0%, and when the voltage is 0 V, α=100%; in a polymer dispersed LCD, when the voltage is 65 V, α=75%, and when the voltage is 0 V, α=6%; in an OLED display, when the current is 0 mA, α=0%, and when the current is 500 mA, α=70%.

Particularly, the non-transparent image region may be manually set up, or the transparency of certain image region may be automatically adjusted when the boot-up procedure is executed. The processing unit 106 may also be applied to detect and determine the image region where the transparency need be adjusted. FIG. 4 is a flow chart illustrating a transparency adjustment method of a transparent display device according to an embodiment of the invention. With reference to FIG. 1 and FIG. 4, in step S402, the processing unit 106 detects a gray scale level of an image object in the transparent image frame. The processing unit 106 then determines whether the gray scale level of the image object is lower than a predetermined gray scale level in step S404. If the gray scale level of the image object is lower than the predetermined gray scale level, the processing unit 106 controls the backlight-penetrating unit 104 to scatter or to block the backlight L1 corresponding to the image object, so as to reduce transparency of the image object (step S406). On the contrary, if the gray scale level of the image object is not lower than the predetermined gray scale level, the transparency of the image object is not reduced (step S408).

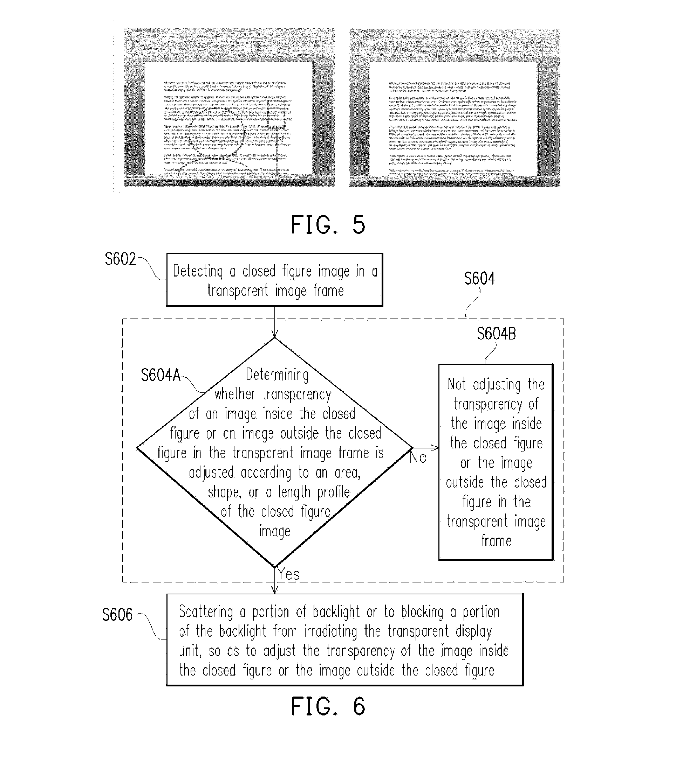

For instance, given that the gray scale level ranges from 0 to 255, the predetermined gray scale level may be 200. If the gray scale level of the image object is higher than 200, the α value corresponding to the image object is set as 100%; if the gray scale level of the image object is lower than 200, the α value corresponding to the image object is set as 0%. FIG. 5 is a schematic diagram illustrating transparency adjustment based on a gray scale level of an image object according to an embodiment of the invention. With reference to FIG. 5, in a document file with black texts and white background color, the gray scale level of the white background is low, and the processing unit 106 thus controls the backlight-penetrating unit 104 to reduce the transparency of the white background. Thereby, the background image at the left side (shown by dotted lines) is blocked by the backlight-penetrating unit 104 after transparency adjustment, so that the contents of the document file may be clearly shown (as indicated in the right-handed view).

FIG. 6 is a flow chart illustrating a transparency adjustment method of a transparent display device according to an embodiment of the invention. With reference to FIG. 1 and FIG. 6, in the present embodiment, the image region where the transparency need be adjusted is determined based on the properties of a closed figure in the transparent image frame. In step S602, the processing unit 106 detects a closed figure image in the transparent image frame. The processing unit 106 then determines whether transparency of an image inside the closed figure or an image outside the closed figure in the transparent image frame is adjusted according to an area, shape, or a length profile of the closed figure image (step S604). According to the determination result, the processing unit 106 controls the backlight-penetrating unit 104 to scatter a portion of the backlight L1 or to block a portion of the backlight L1 from irradiating the transparent display unit 102, so as to adjust the transparency of the image inside the closed figure or the image outside the closed figure (step S606).

Here, the processing unit 106 may determine whether the area or the length profile of the closed figure image is greater than the corresponding predetermined value, or determine whether the shape of the closed figure image conforms to a predetermined figure in step S604A, so as to determine whether the transparency of the image inside the closed figure or the image outside the closed figure in the transparent image frame is adjusted according to the area, the shape, or the length profile of the closed figure image. If the area or the length profile of the closed figure image is greater than the corresponding predetermined value, or if the shape of the closed figure image conforms to the predetermined figure, the transparency of the image inside the closed figure or the image outside the closed figure in the transparent image frame is adjusted in step S606. By contrast, if the area or the length profile of the closed figure image is not greater than the corresponding predetermined value, or if the shape of the closed figure image does not conform to the predetermined figure, the transparency of the image inside the closed figure or the image outside the closed figure in the transparent image frame is not adjusted (step S604B).

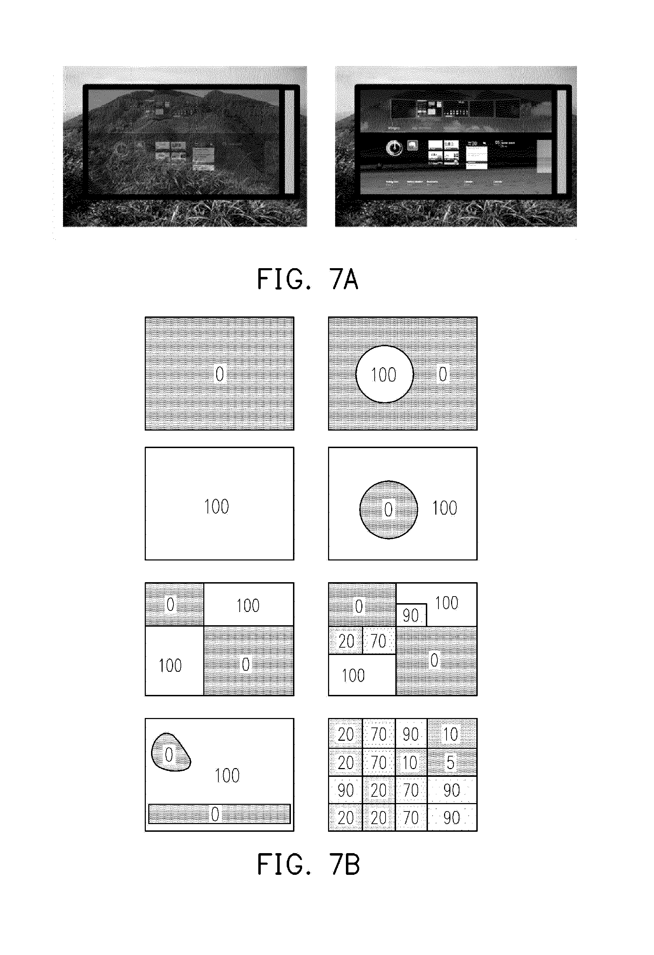

The predetermined value corresponding to the area or the length profile of the closed figure image may be respectively 3000 pixels and 40 pixels, for instance, and the predetermined figure of the closed figure image may be circular, rectangular, triangular, or in any other shape defined by a user, for instance. FIG. 7A is a schematic diagram exemplarily illustrating transparency adjustment based on a closed figure image according to an embodiment of the invention. With reference to FIG. 7A, after the closed figure is defined, the transparency of the image inside the closed figure or the image outside the closed figure may be adjusted. According to the present embodiment, the predetermined figure is rectangular. From FIG. 7A, it can be observed that the processing unit 106, after determining the rectangular closed figure P1 in the transparent image frame conforms to the predetermined figure, controls the backlight-penetrating unit 104 to scatter or block the backlight L1 of the corresponding region, so as to reduce the transparency of the rectangular closed figure P1. Thereby, the contents of the rectangular closed figure P1 become more visible.

FIG. 7B is a schematic diagram exemplarily illustrating transparency adjustment based on a closed figure image according to an embodiment of the invention. In the present embodiment, the transparency of the image inside the closed figure or the image outside the closed figure may be adjusted in a "multi-level" manner, i.e., the corresponding α value may be various (the unit symbol in FIG. 7B is %). As shown in FIG. 7B, the α value may be 0%, 5%, 10%, 20%, 70%, 90%, 100%, etc.

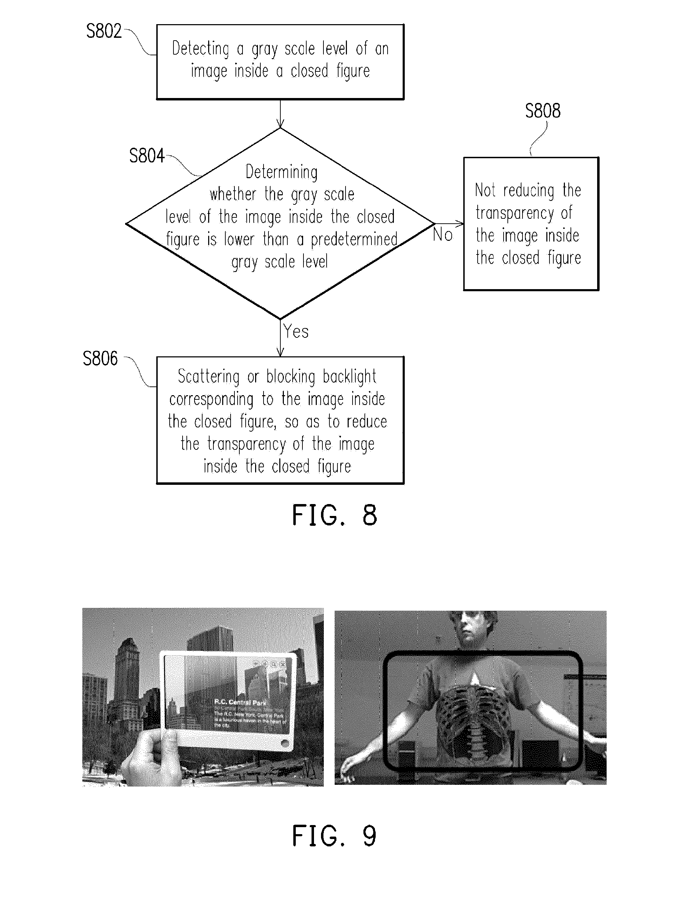

In an embodiment of the invention, the embodiment shown in FIG. 4 and the embodiment shown in FIG. 6 may be combined, and the method described in the embodiment as shown in FIG. 4 may be applied to determine whether the transparency of the image inside the closed figure is adjusted after the closed figure is detected. FIG. 8 is a flow chart illustrating a transparency adjustment method of a transparent display device according to an embodiment of the invention. In step S802, the processing unit 106 detects a gray scale level of the image inside the closed figure. The processing unit 106 in step S804 determines whether the gray scale level of the image inside the closed figure is lower than a predetermined gray scale level. If the gray scale level of the image inside the closed figure is lower than the predetermined gray scale level, the processing unit 106 controls the backlight-penetrating unit 104 to scatter or to block the backlight L1 corresponding to the image inside the closed figure, so as to reduce the transparency of the image inside the closed figure (step S806). On the contrary, if the gray scale level of the image inside the closed figure is not lower than the predetermined gray scale level, the transparency of the image inside the closed figure is not reduced (step S808).

That is, the α values of different regions of the transparent image frame may be set up by detecting the gray scale level of the image or detecting the closed figure. Note that the number of α values may be at least the same as the number of regions of the backlight-penetration unit 104. For instance, if the number of regions of the backlight-penetration unit 104 is 1, the number of α values may be 1∼1920x1080, and the maximum number of α values is equal to the resolution of the transparent display unit 102. Both the detection of the gray scale level of an image or the detection of the closed figure refer to the detection of displayed image contents, and the detectable image contents include a 2D interface of an operating system, a 3D illustration created by an application program, and to-be-displayed image contents captured from a video camera.

As described above, the transparency of the transparent image frame is partially or wholly adjusted according to the display data signal D1; thereby, the display quality of the transparent display device 100 is not negatively affected by the environmental background, or the applicability of the transparent display device may be further enhanced. FIG. 9 is a schematic diagram exemplarily illustrating a transparent image frame applying the transparency adjustment method according to an embodiment of the invention. Through adjusting the transparency of the transparent image frame, a user is able to learn information of the displayed object, e.g., information of buildings or inner organs of human body (the right-handed view in FIG. 9). In FIG. 9, the descriptive texts of the building at the left side are displayed in a non-transparent manner, while the rest information is displayed in a transparent manner

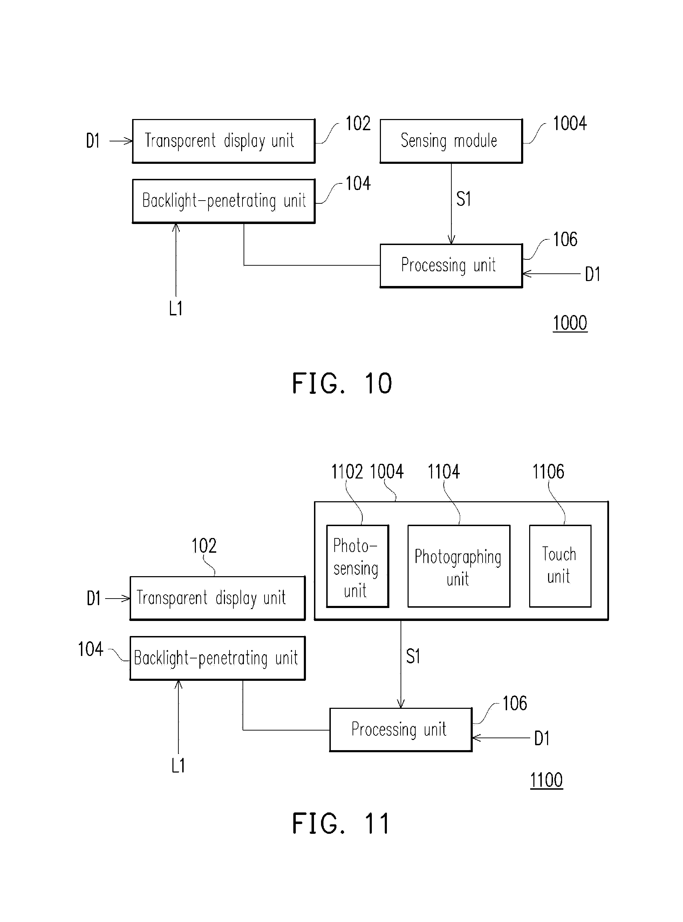

FIG. 10 is a schematic diagram illustrating a transparent display device according to another embodiment of the invention. In comparison with the transparent display device 100 depicted in FIG. 1, the transparent display device 1000 described herein further includes a sensing module 1004 that is configured on the transparent display unit 102 and coupled to the processing unit 106. The sensing module 1004 is applied to sense one of conditions of environmental background of the transparent display device 1000 and a user's input, and the sensing module 1004 accordingly outputs a sensing signal S1. The environmental condition may refer to the profile lines or the color block distribution of the environment where the transparent display device 1000 is located; the user's input may include an input action of the user with use of a keyboard, a mouse, or a touch panel.

According to the present embodiment, the processing unit 106 further controls the backlight-penetrating unit 104 to scatter or block all or part of the backlight L1 according to the sensing signal S1, so as to adjust transparency of the transparent image frame. As described in the previous embodiment, the transparency adjustment of the transparent image frame is not limited to adjustment of the entire frame, and it is likely to adjust the transparency of partial frame, such that the transparent display device 1000 may comply with actual application requirements. Through adjustment of conditions of the environment background and the user's input, the transparency of all or several regions of the transparent image frame is adjusted, and hence the display quality of the transparent display device 1000 is not negatively affected by the environmental background.

FIG. 11 is a schematic diagram illustrating a transparent display device according to another embodiment of the invention. Specifically, the sensing module 1004 of the transparent display device 1100 may include a photo-sensing unit 1102, a photographing unit 1104, and a touch unit 1106. Note that the sensing module 1004 in other embodiments of the invention may merely include one of or two of the photo-sensing unit 1102, the photographing unit 1104, and the touch unit 1106. The photo-sensing unit 1102 senses the light intensity of the environmental background of the transparent display device 1100 and thereby outputs the sensing signal S1. When the light intensity exceeds a threshold value, the processing unit 106 determines the region where the backlight-penetrating unit 104 scatters or blocks the backlight L1 according to the sensing signal S1, so as to control the transparent display unit 102 to reduce transparency of the transparent image frame. The threshold value of the light intensity may be varied in different photo-sensing units 1102. For instance, the threshold value may be set as ISO 1000, 300 lux, or 3.2 V of a sensing voltage, for instance.

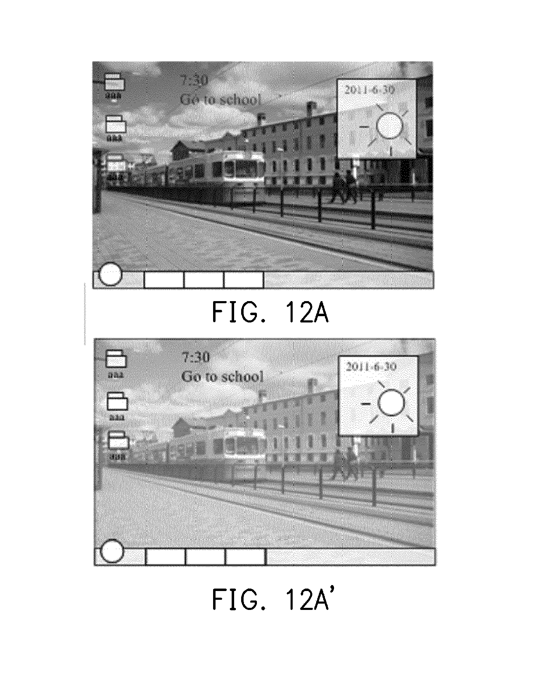

FIG. 12A and FIG. 12A' are schematic diagrams illustrating adjustment of transparency of a transparent image frame according to an embodiment of the invention. Here, FIG. 12A shows the transparent image frame before adjustment of transparency, while FIG. 12A' shows the transparent image frame after adjustment of transparency. As indicated in FIG. 12A and FIG. 12A', the image object interfered by the background becomes more visible after the transparency of the transparent image frame is reduced as a whole. For instance, after the transparency of the transparent image frame is reduced as a whole, the reminder texts "7:30 Go to school" shown in FIG. 12A and FIG.12A' become more legible.

The photographing unit 1104 serves to capture the ambient image of the environmental background of the transparent display device 1100 as the sensing signal S1, and the processing unit 106 calculates at least one of the light intensity and the clutter degree of the ambient image according to the sensing signal S1 and controls the transparent display unit 102 to adjust the transparency of the transparent image frame according to at least one of the light intensity and the clutter degree of the ambient image. When the light intensity or the clutter degree of the ambient image exceeds the corresponding threshold value or corresponds to a corresponding predetermined range, the processing unit 106 determines a transparency adjustment parameter(e.g., the α value or the corresponding voltage or current) of the corresponding light intensity or the corresponding clutter degree according to the sensing signal S1 and outputs the transparency adjustment parameter to the backlight-penetrating unit 104, so as to reduce the transparency of an image region corresponding to the ambient image (whose light intensity or clutter degree exceeds the corresponding threshold value or corresponds to the corresponding predetermined range) in the transparent image frame.

The threshold value of the light intensity may be determined by an average gray scale level of the ambient image (i.e., the sensing signal S1), and the average gray scale level may be calculated with every 1600 display pixels as one unit, for instance. With a range of 256 gray scale levels, if the average gray scale level exceeds 180, the transparency of the image region is determined to be reduced. From another perspective, the threshold value of the clutter degree may be determined by the image variation frequency of an image object in the ambient image, e.g., every 30 display pixels as one unit. If the image variation frequency of an image object exceeds 10 B-W cycle, the transparency of the image region is determined to be reduced. Note that the transparency herein may be determined by analyzing the image variation frequency or the frequency distribution of all or parts of the image regions in the background. The analysis may be done by detecting the edge of the background image and converting the same into a gray-scale image. Certain gray scale difference (e.g., greater than 100 levels) is analyzed and deemed as a B-W cycle, and the frequency of each position is analyzed based on the number and density of the cycles, so as to subsequently adjust the transparency. The configuration of said threshold values is merely exemplary and should not be construed as a limitation to the invention.

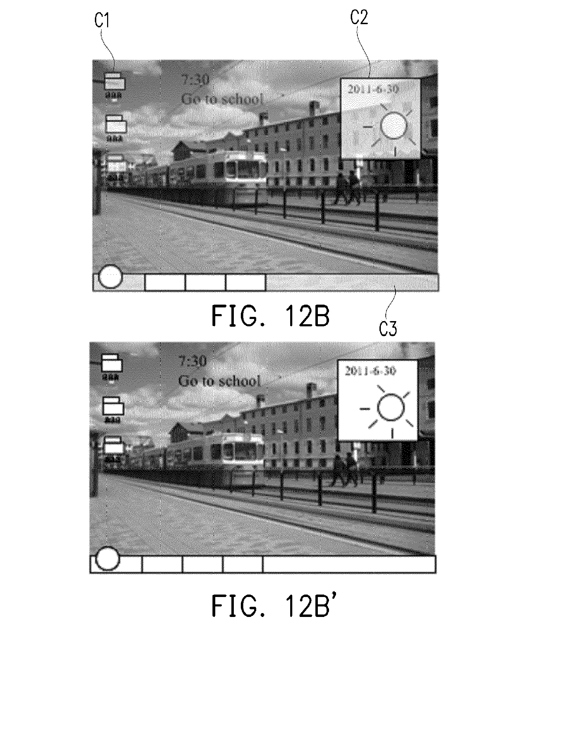

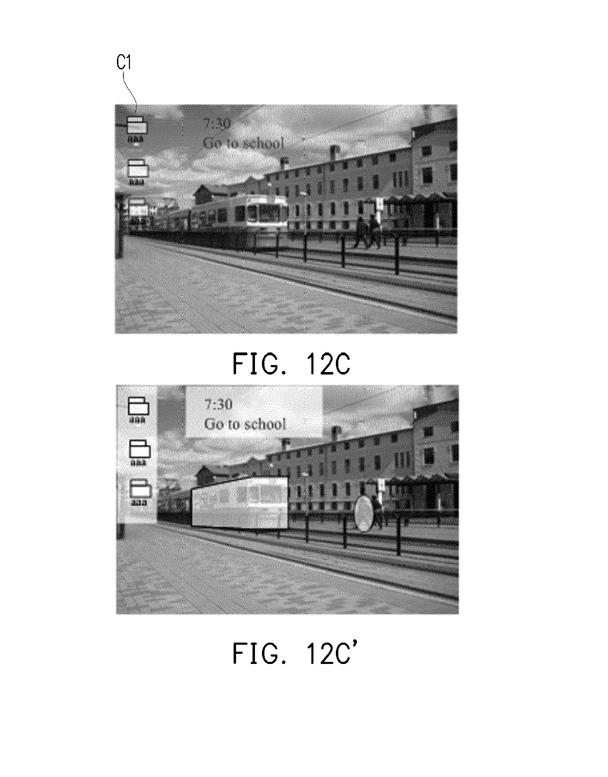

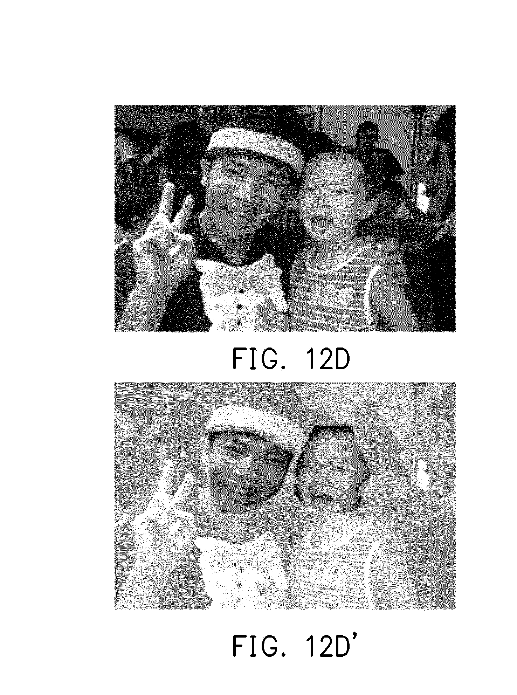

The adjustment of transparency of several image regions in the transparent image frame may expand the application scope of the transparent display device 1100. FIG. 12B to FIG. 12D and FIG. 12B' to FIG. 12D' are schematic diagrams exemplarily illustrating adjustment of transparency of a transparent image frame according to an embodiment of the invention. Here, FIG. 12B to FIG. 12D show the transparent image frame before adjustment of transparency, while FIG. 12B' to FIG. 12D' show the transparent image frame after adjustment of transparency. With reference to FIG. 12Band FIG. 12B', the desktop icon C1, the display window C2 on the desktop, and the toolbar C3 shown in FIG. 12B are affected by the environmental background and are not clearly shown prior to transparency adjustment. After the adjustment of transparency, the image contents of the desktop icon C1, the display window C2 on the desktop, and the toolbar C3 can be clearly displayed, and the user is not precluded from observing the background scenery through the transparent display device 1100. Thereby, the user may compare the information of environmental background obtained online with the information of environmental background observed through the transparent display device 1100, which facilitates the use of the transparent display device 1100.

For instance, when a user observes the solar eclipse, the transparent display device 100 may be placed between the sun and eyes of the user, and the photo-sensing unit 1102 may sense that the sun is a highly intense light source and merely control the backlight-penetrating unit 104 to scatter or block the backlight light L1 at the image region corresponding to the sun. Thereby, the transparency can be reduced, and the user is allowed to easily view the solar eclipse through the transparent display device 1100.

In an embodiment of the invention, the processing unit 106 may directly adjust the transparency of an image object corresponding to an application program in the transparent image frame through the backlight-penetrating unit 104 according to the application program. For instance, the desktop icon C1, the display window C2 on the desktop, and the toolbar C3 shown in FIG. 12B may be directly configured to have low transparency. The image objects corresponding to the application programs are not limited to have the same transparency; namely, the image objects, if corresponding to different application programs, may be configured to have different transparencies. For instance, the transparency of the desktop icon C1 may be set as 50%, and the transparency of the display window C2 on the desktop and that of the toolbar C3 may be set as 0%. Note that the image object not only includes the desktop icon, the display window, and the toolbar described above but also comprises a graphic user interface (GUI), certain application programs (e.g., word, photo viewer, and widget) or certain image files (in a doc, jpg, avi, or mpeg format). Besides, each image object may be set to have different transparencies. When various types of image objects are overlapped, the transparencies of these image objects may be different, such that a user is allowed to identify individual image objects.

In addition, the processing unit 106 may directly set up the transparency of certain image region in the transparency image frame, as shown in FIG. 12C and 12C'. Through the backlight-penetrating unit 104, the transparency of the region around the desktop icon C1 and the reminder texts "7:30 Go to school" is reduced, such that the image contents of the desktop icon C1 and the reminder texts "7:30 Go to school" may be easily recognized without being disturbed by the environmental background. As shown in FIG. 12C', the processing unit 106 may reduce the transparency of an image region corresponding to certain background scenery (e.g., the streetcar and people shown in FIG. 12C') in the transparent image frame, so that the user may selectively watch the scenery objects in the environmental background.

Besides, the processing unit 106 may directly compare and analyze the ambient image of the transparent display device 1100 captured by the photographing unit 1104 and then display the relevant information according to the comparison and analysis. For instance, when a user goes shopping at a supermarket, information (e.g., ingredients) regarding a product (e.g., beverage) behind the transparent display device 1100 may be described through augmented reality (AR), given that the transparent display device 1100 is applied to a mobile electronic device, e.g., a cell phone or a tablet PC. The processing unit 106 may first compare and analyze the product, so as to learn the brand, the ingredients, the price, or other information of the product, and the processing unit 106 may analyze whether the light intensity or the clutter degree of the environmental background interferes with the display of the descriptions. If the light intensity or the clutter degree of the environmental background indeed interferes with the display of the descriptions, the backlight-penetrating unit 104 reduces the transparency of the transparent display frame outside the image region occupied by the product, and the relevant information of the product is displayed on the region with the reduced transparency. Thereby, the user is able to watch the relevant information of the product. Here, the clutter degree may serve as an image with certain features, such as human face features, object features, or high frequency distribution features.

When a user, for instance, takes pictures with use of a mobile electronic device having the transparent display device 1100, the processing unit 106 may recognize human faces on images captured by pressing the shutter of the mobile electronic device, and the backlight-penetrating unit 104 reduces the transparency of regions outside the human face image region. As shown in FIG. 12D and FIG. 12D', the user can thereby edit the information of the human beings in the image regions with the reduced transparency. Note that the human face recognition may be applied on certain users or other human beings.

As shown in FIG. 11, the touch action of a user is sensed, and thereby the sensing signal S1 is output. The processing unit 106 finds out the transparency adjustment parameter (e.g., the α value or the corresponding voltage or current) of an image region corresponding to the touch action of the user and outputs the transparency adjustment parameter to the backlight-penetrating unit 104, so as to reduce the transparency of the touch image region. For instance, the transparency of the desktop icon C1 shown in FIG. 12B is initially assumed to be 50%; when a user clicks on the desktop icon C1, the touch unit 1106 senses the user's click action and thereby outputs the sensing signal S1. The processing unit 106, according to the sensing signal S1, finds out the position of the clicked desktop icon C1 and thereby determines the transparency adjustment parameter. The transparency adjustment parameter is then output to the backlight-penetrating unit 104 to reduce the transparency of the clicked desktop icon C1. By changing the transparency of the touched image region in response to the touch action of the user, the user is apt to verify the effect of his or her touch action. In another embodiment of the invention, visual feedback of the touch action may be represented by circular ripples or circles on the GUI. Besides, the transparency may be correspondingly adjusted in response to cursor movement or other similar action.

Note that the sensing module 1004 of the transparent display device 1100 described in the embodiment as shown in FIG. 11 includes the photo-sensing unit 1102, the photographing unit 1104, and the touch unit 1106, while the sensing module 1004 may further include other input tools (e.g., press buttons, keyboards, or mice) when it is actually applied. In an embodiment of the invention, the sensing module 1004 may merely include one or two of the photo-sensing unit 1102, the photographing unit 1104, and the touch unit 1106.

Some reference embodiments are provided hereinafter. Here, the transparent display device is assumed to be a transparent LCD panel in an office. Since ample light is often kept in the office work area, a user is able to observe the object behind the transparent display. Through the photo-sensor, the transparent LCD panel detects the light intensity exceeds 300 lux, and thus the transparency reduction mechanism is activated by controlling the backlight-penetrating unit 104 to scatter or block the backlight L1. As such, the user is no longer or barely able to watch the object behind the display.

In another embodiment, if a user presses a confirmation button on the touch interface of a cell phone according to normal systematic procedures, the GUI (excluding the button region) becomes visually non-transparent in response to the user's action.

In another embodiment, when a user places a tablet PC between the sun and his or her eyes, the photographing unit observes the highly intense light source (i.e., the sun) and thus merely scatters or blocks the backlight L1 at the region corresponding to the sun, so as to reduce the transparency in part.

In another embodiment, when a user touches an icon on the GUI of a touch screen, the transparent display device learns the selection of the icon through the touch action, and thereby the transparent display device reduces the transparency of the region corresponding to the icon and relatively raises the transparencies of other image regions. After fingers of the user are moved away from the screen, the transparency setup returns to its original state, and the program corresponding to the touched icon is executed.

In another embodiment, each region touched by a user's fingers correspondingly has high transparency, and therefore transparent holes may gradually appear on the GUI. The transparent holes may then gradually disappear.

To sum up, the backlight-penetrating unit is utilized to scatter backlight or block the backlight from irradiating the transparent display unit, so as to adjust the transparency of the transparent display device and further enhance readability of an image on the transparent display device according to an embodiment of the invention. The processing unit described in an embodiment of the invention may determine whether the transparency of the transparent image frame need be adjusted based on the sensing result detected by the sensing module, so as to prevent the display quality of the transparent display device from being affected and deteriorated by the environmental background. Moreover, the processing unit may further compare and analyze the environmental background according to the sensing result and then display the relevant information according to the comparison and analysis, which significantly facilitates the use of the transparent display device.

## Claims

1. A transparent display device (100, 1000, 1100) comprising:
a transparent display unit (102) displaying a transparent image frame according to a display data signal (D1); and
a backlight-penetrating unit (104) configured at one side of the transparent display unit (102); and
a processing unit (106) coupled to the backlight-penetrating unit (104), the processing unit (106) controlling the backlight-penetrating unit (104) to scatter a backlight (L1) or to block the backlight (L1) from irradiating the transparent display unit (102), so as to adjust transparency of the transparent image frame.

2. The transparent display device (100, 1000, 1100) as recited in claim 1, wherein the processing unit (106) further controls the backlight-penetrating unit (104) to scatter or block all or part of the backlight (L1) according to the display data signal (D1), so as to reduce transparency of all or several regions of the transparent image frame.

3. The transparent display device (100, 1000, 1100) as recited in claim 2, wherein the regions of the transparent image frame having the reduced transparency are image regions corresponding to the display data signal (D1).

4. The transparent display device (1000, 1100) as recited in claim 2, further comprising:
a sensing module (1004) configured on the transparent display unit (102) and coupled to the processing unit (106), the sensing module (1004) sensing one of conditions of environmental background of the transparent display device (1000, 1100) and a user's input and accordingly outputting a sensing signal (S1), the processing unit (106) further controlling the backlight-penetrating unit (104) to scatter or block all or part of the backlight (L1) according to the sensing signal (S1), so as to adjust the transparency of all or several regions of the transparent image frame.

5. The transparent display device (100, 1000, 1100) as recited in claim 1, wherein the backlight-penetrating unit (104) is an organic light-emitting diode display panel, a polymer dispersed liquid crystal display panel, or a twisted nematic liquid crystal display panel.

6. The transparent display device (100, 1000, 1100) as recited in claim 1, wherein the processing unit (106) further adjusts the transparency of the transparent image frame according to a gray scale level of an image object in the transparent image frame, and transparency of the image object is reduced if the gray scale level of the image object is lower than a predetermined gray scale level.

7. The transparent display device (100, 1000, 1100) as recited in claim 1, wherein the processing unit (106) further detects a closed figure image in the transparent image frame and adjusts transparency of an image inside the closed figure or an image outside the closed figure in the transparent image frame.

8. The transparent display device (100, 1000, 1100) as recited in claim 1, wherein the transparent display unit (102) is an organic light-emitting diode display panel or a liquid crystal display panel.

9. A transparency adjustment method of a transparent display device (100, 1000, 1100), the transparent display device (100, 1000, 1100) comprising a transparent display unit (102), the transparent display unit (102) displaying a transparent image frame according to a display data signal (D1), the transparency adjustment method comprising:
detecting (S402) a gray scale level of an image object in the transparent image frame;
determining (S404) whether the gray scale level of the image object is lower than a predetermined gray scale level; and
if the gray scale level of the image object is lower than the predetermined gray scale level, scattering or blocking (S406) a backlight (L1) corresponding to the image object, so as to reduce transparency of the image object.

10. A transparency adjustment method of a transparent display device (100, 1000, 1100), the transparent display device (100, 1000, 1100) comprising a transparent display unit (102), the transparent display unit (102) displaying a transparent image frame according to a display data signal (D1), the transparency adjustment method comprising:
detecting (S602) a closed figure image in the transparent image frame;
determining (S604) whether transparency of an image inside the closed figure or an image outside the closed figure in the transparent image frame is adjusted according to an area, shape, or a length profile of the closed figure image; and
scattering (S606) a portion of a backlight (L1) or blocking (S606) a portion of the backlight (L1) from irradiating the transparent display unit (102), so as to adjust the transparency of the image inside the closed figure or the image outside the closed figure.

11. The transparency adjustment method of the transparent display device (100, 1000, 1100) as recited in claim 10, wherein if the area or the length profile of the closed figure image is greater than a corresponding predetermined value, or if the shape of the closed figure image conforms to a predetermined figure, the transparency of the image inside the closed figure or the image outside the closed figure in the transparent image frame is adjusted (S606).

12. The transparency adjustment method of the transparent display device (100, 1000, 1100) as recited in claim 10, wherein the step of determining whether the transparency of the image inside the closed figure or the image outside the closed figure is adjusted comprises:
detecting (S802) a gray scale level of the image inside the closed figure;
determining (S804) whether the gray scale level of the image inside the closed figure is lower than a predetermined gray scale level; and
if the gray scale level of the image inside the closed figure is lower than the predetermined gray scale level, scattering or blocking (S806) a backlight (L1) corresponding to the image inside the closed figure, so as to reduce the transparency of the image inside the closed figure.
